# FASCICULE DE BREVET EUROPEEN

(11) **EP 2 819 863 B1**
(45) Date de publication et mention de la délivrance du brevet: **27.01.2016**
(21) Numéro de dépôt: 13701809.9
(22) Date de dépôt: 01.02.2013
(51) Int. Cl.: F24H 3/00, B60H 1/22, H05B 1/02

(54) **DISPOSITIF DE CHAUFFAGE ÉLECTRIQUE DE FLUIDE POUR VÉHICULE AUTOMOBILE ET APPAREIL DE CHAUFFAGE ET/OU DE CLIMATISATION ASSOCIÉ**
ELEKTRISCHE FLUIDERWÄRMUNGSVORRICHTUNG UND ENTSPRECHENDE HEIZUNGS- UND/ODER KLIMATISIERUNGSVORRICHTUNG
ELECTRIC FLUID HEATING DEVICE FOR A VEHICLE AND CORRESPONDING HEATING AND/OR COOLING DEVICE

(30) Priorité: 29.02.2012 FR 1200603
(43) Date de publication de la demande: 07.01.2015
(73) Titulaire: Valeo Systemes Thermiques, 78320 Le Mesnil Saint Denis (FR)
(72) Inventeur: PIERRON, Frédéric, 78120 Rambouillet (FR); PUZENAT, Bertrand, 78180 Montigny Le Bretonneux (FR); LEBORGNE, José, 28600 Luisant (FR)
(74) Mandataire: Metz, Gaëlle
(86) Numéro de dépôt international: PCT/EP2013/052001
(87) Numéro de publication internationale: WO 2013/127596

(56) Documents cités:
- EP-A1- 1 872 986
- EP-A1- 2 353 898
- WO-A1-03/086018

## Description

L'invention concerne un dispositif de chauffage électrique de fluide pour véhicule automobile. L'invention s'applique plus particulièrement aux appareils de chauffage et/ou de climatisation de véhicules automobiles comportant un tel dispositif de chauffage.

De façon habituelle, le réchauffage de l'air destiné au chauffage de l'habitacle d'un véhicule automobile, ainsi qu'au désembuage et au dégivrage, est assuré par le passage d'un flux d'air à travers un échangeur de chaleur, plus précisément par un échange de chaleur entre le flux d'air et un fluide. Il s'agit généralement du fluide de refroidissement dans le cas d'un moteur thermique. Toutefois, ce mode de chauffage peut s'avérer inadapté ou insuffisant pour garantir un chauffage rapide et efficace de l'habitacle du véhicule, en particulier pour assurer un réchauffement de l'habitacle ou dégivrage ou désembuage avant utilisation du véhicule en environnement très froid ou encore lorsqu'une montée très rapide de la température est souhaitée.

En outre, dans le cas d'un véhicule électrique, la fonction de chauffage n'est plus réalisée par la circulation du fluide de refroidissement dans l'échangeur de chaleur. On peut cependant prévoir un circuit d'eau pour le chauffage de l'habitacle mais ce mode de chauffage peut aussi s'avérer inadapté ou insuffisant pour garantir un chauffage rapide et efficace de l'habitacle du véhicule.

Par ailleurs, afin de réduire l'encombrement et le coût du fait du circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant est dans ce cas, utilisée de façon à réchauffer le flux d'air. Il convient pour ce faire d'utiliser un évaporateur de la boucle de climatisation comme un condenseur. Toutefois, ce mode de chauffage aussi peut s'avérer inadapté ou insuffisant. En effet, les performances de la boucle de climatisation en mode pompe à chaleur dépendent des conditions climatiques extérieures; et en cas d'air extérieur avec une température trop basse, cet air ne peut pas être utilisé comme source d'énergie thermique.

Une solution connue consiste à adjoindre à l'échangeur de chaleur ou au circuit d'eau ou encore à la boucle de climatisation, un dispositif de chauffage électrique additionnel. Le dispositif de chauffage électrique additionnel peut être adapté pour chauffer en amont le fluide, tel que le fluide de refroidissement pour le moteur thermique, ou l'eau du circuit d'eau de chauffage de l'habitacle du véhicule électrique ou encore le fluide réfrigérant de la boucle de climatisation.

Un tel dispositif de chauffage électrique est par exemple connu du document EP 1 872 986 A1, qui est considéré comme l'art antérieur le plus proche.

Le dispositif de chauffage électrique additionnel comporte un élément chauffant en contact avec le fluide à chauffer. La mise en oeuvre de l'élément chauffant est contrôlée par un moyen de commande comportant un interrupteur de courant électrique pour autoriser et/ou interdire la mise en oeuvre de l'élément chauffant auquel il est relié. Toutefois, on constate que l'interrupteur tend à s'échauffer lors de sa mise en oeuvre et que cet échauffement peut perturber son fonctionnement.

L'invention a donc pour objectif de proposer un dispositif de chauffage électrique de fluide de véhicule automobile et un appareil de chauffage et/ou climatisation de véhicules automobiles dont la fiabilité de mise en oeuvre est améliorée.

À cet effet, l'invention a pour objet un dispositif de chauffage électrique de fluide pour véhicule automobile, caractérisé en ce qu'il comporte :
- au moins un module de chauffe comportant au moins un élément chauffant et définissant un circuit de guidage du fluide à chauffer,
- un moyen de commande de l'élément chauffant comportant un interrupteur de courant électrique relié audit élément chauffant et un dissipateur thermique présentant une première surface destinée à être en contact avec le fluide et une deuxième surface en contact thermique avec une semelle dudit interrupteur de courant électrique.

Le dispositif de chauffage électrique peut en outre comporter une ou plusieurs caractéristiques suivantes, prises séparément ou en combinaison :
- le dispositif de chauffage comporte un boîtier d'entrée de fluide dans lequel un canal d'entrée du fluide à chauffer est formé, ledit canal d'entrée communiquant avec le circuit de guidage du fluide, ladite première surface du dissipateur thermique délimitant au moins partiellement ledit canal d'entrée, ladite deuxième surface étant hors dudit canal d'entrée,
- la deuxième surface est formée dans une embase du dissipateur thermique recevant un support d'interrupteur du module de commande logeant au moins un interrupteur de courant électrique, ledit support d'interrupteur présentant une ouverture laissant apparaître la semelle de l'interrupteur de courant électrique et ledit support d'interrupteur étant reçu dans l'embase avec l'ouverture orientée face à ladite deuxième surface,
- ledit support d'interrupteur comporte un moyen de fixation amovible à un support de circuit électrique du moyen de commande,
- le dispositif de chauffage comporte deux modules de chauffe, le boîtier d'entrée de fluide présentant une première cavité recevant une extrémité d'entrée du premier module de chauffe et une deuxième cavité recevant une extrémité d'entrée du deuxième module de chauffe, ledit canal d'entrée reliant en parallèle lesdites cavités,
- la première surface du dissipateur thermique délimitant au moins partiellement le canal d'entrée est formée par la surface interne d'un conduit du canal d'entrée reliant la première cavité à la deuxième cavité du boîtier d'entrée de fluide,
- la forme générale du dissipateur thermique s'étend entre les cavités du boîtier d'entrée de fluide,
- le dissipateur thermique comporte un matériau métallique,
- le dispositif de chauffage comporte une interface thermique interposée entre le dissipateur thermique et la semelle de l'interrupteur de courant électrique,
- l'interface thermique est un film isolant électrique et conducteur thermique,
- l'interface thermique comporte un matériau à changement de phase,
- le boîtier d'entrée de fluide comporte un premier moyen de positionnement d'un support de circuit électrique du moyen de commande,
- le dispositif de chauffage comporte un boîtier de sortie de fluide dans lequel un canal de sortie du fluide est formé, ledit canal de sortie communiquant avec le circuit de guidage du fluide, ledit boîtier de sortie de fluide et ledit boîtier d'entrée de fluide étant respectivement raccordés aux extrémités opposées des modules de chauffe,
- le boîtier de sortie de fluide présente un deuxième moyen de positionnement du support de circuit électrique du moyen de commande.

L'invention concerne également un appareil de chauffage et/ou climatisation pour véhicule automobile, caractérisé en ce qu'il comporte un dispositif de chauffage électrique tel que défini précédemment.

La première surface du dissipateur thermique est ainsi en contact avec le fluide circulant dans le dispositif de chauffage tandis que la deuxième surface du dissipateur thermique est en contact thermique avec la semelle de l'interrupteur de courant électrique. On entend par « contact thermique » soit que la deuxième surface du dissipateur soit plaquée contre la semelle de l'interrupteur en contact direct sans intermédiaire, soit que la deuxième surface du dissipateur soit plaquée contre la semelle de l'interrupteur avec interposition d'une interface thermiquement conductrice favorisant l'échange thermique entre le dissipateur et l'interrupteur.

La circulation du fluide dans le dispositif de chauffage est ainsi utilisée pour dissiper la chaleur générée par l'interrupteur de courant électrique, par conduction thermique dans le dissipateur thermique puis évacuation de la chaleur dans le fluide.

Le fluide étant plus froid à son arrivée dans le boîtier d'entrée de fluide qu'à la sortie des modules de chauffe en fonctionnement, l'agencement du dissipateur thermique dans le boîtier d'entrée de fluide permet d'optimiser cette dissipation de chaleur dans le fluide encore « froid ».

Le dispositif de chauffage est ainsi plus fiable, sans augmentation de son encombrement. De plus, l'énergie thermique créée par l'interrupteur de courant électrique contribue à réchauffer le fluide traversant le dissipateur thermique.

Un autre avantage réside dans la possibilité d'utiliser des interrupteurs de courant électrique qui n'ont pas besoin de résister aux températures élevées qu'un tel dispositif de chauffage électrique engendrerait s'il ne comportait pas de dissipateur thermique.

Par ailleurs, l'utilisation d'un support d'interrupteur permet de positionner l'interrupteur de courant électrique sur le support de circuit électrique durant l'assemblage du support de circuit électrique aux boîtiers d'entrée et de sortie de fluide et durant l'assemblage du dispositif de chauffage. Le support d'interrupteur permet également de protéger l'interrupteur de courant électrique d'éventuels chocs mécaniques, particulièrement lorsqu'il doit être manipulé et/ou pendant son assemblage. Enfin, le support d'interrupteur forme une interface mécanique robuste entre l'interrupteur de courant électrique, le support de circuit électrique et les autres éléments du dispositif de chauffage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente une vue en perspective d'un dispositif de chauffage électrique de fluide pour véhicule automobile selon la présente invention, partiellement représenté en transparence,
- la figure 2 représente le dispositif de chauffage électrique de la figure 1 représenté en plein auquel on a ôté un boîtier de sortie de fluide,
- la figure 3 représente une vue en coupe partielle selon un plan longitudinal du dispositif de chauffage de la figure 1,
- la figure 4 est une vue en coupe partielle selon un plan transversal sensiblement médian aux deux modules de chauffe, du dispositif de chauffage de la figure 1,
- la figure 5 est une vue en perspective du boîtier d'entrée de fluide du dispositif de chauffage de la figure 1, logeant un dissipateur thermique,
- la figure 6 représente une vue d'une tranche en coupe radiale au module de chauffe, du boîtier d'entrée de fluide et du dissipateur thermique de la figure 5 du dispositif de chauffage électrique de la figure 1,
- la figure 7 représente une vue partielle en coupe selon un plan défini par une diagonale du boîtier d'entrée de fluide, du boîtier d'entrée de fluide et du dissipateur thermique du dispositif de chauffage électrique de la figure 1,
- la figure 8 représente une vue partielle en coupe transversale selon un plan sensiblement médian, du boîtier d'entrée de fluide et du dissipateur thermique du dispositif de chauffage électrique de la figure 1,
- la figure 9 représente une vue partielle en coupe selon un plan radial au module de chauffe, du dispositif de chauffage de la figure 1 comprenant un seul interrupteur de courant électrique,
- la figure 10a représente une vue en perspective du dissipateur thermique de la figure 5,
- la figure 10b représente une vue de dos du dissipateur thermique de la figure 10a,
- la figure 10c représente une vue similaire à la figure 10a du dissipateur thermique,
- la figure 10d représente une vue similaire à la figure 10b du dissipateur thermique,
- la figure 11 représente deux interrupteurs de courant électrique fixés à un support de circuit électrique et un support d'interrupteur désassemblés,
- la figure 12 représente les interrupteurs de courant électrique, le support de circuit électrique et le support d'interrupteur de la figure 11 à l'état assemblé, et
- la figure 13 représente une simulation de la trajectoire du fluide à chauffer entre un canal d'entrée et un canal de sortie d'un dispositif de chauffage.

Dans ces figures, les éléments sensiblement identiques portent les mêmes références.

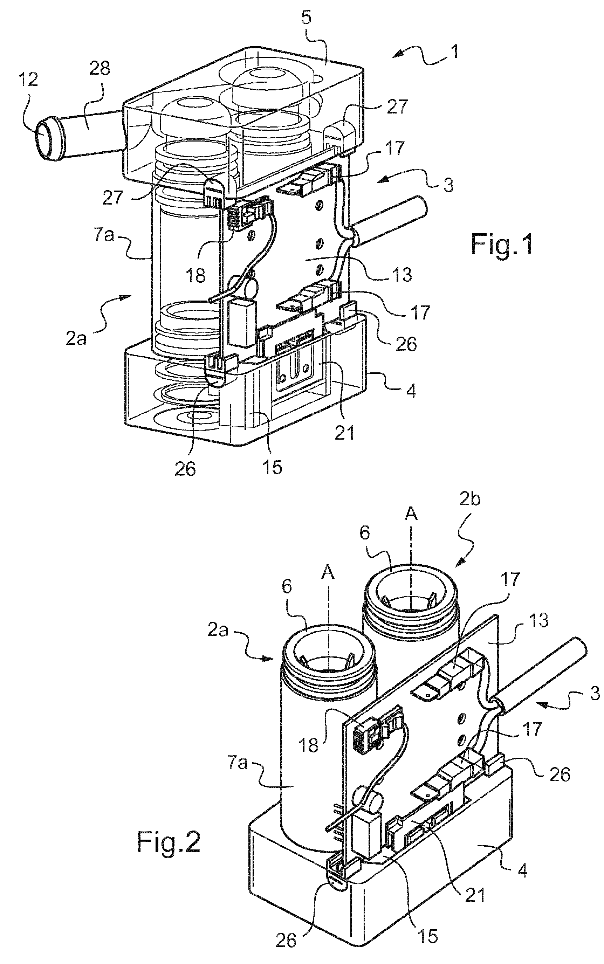

La figure 1 représente un dispositif de chauffage électrique de fluide pour véhicule automobile 1 pour un appareil de chauffage et/ou climatisation.

Le dispositif de chauffage électrique 1 est par exemple un dispositif de chauffage additionnel permettant de chauffer de l'eau avant son entrée dans un circuit de chauffage d'eau pour le chauffage de l'habitacle d'un véhicule électrique. Selon un autre exemple, le dispositif de chauffage électrique 1 est disposé en amont d'un évaporateur d'une boucle de climatisation apte à fonctionner en mode pompe à chaleur, de façon à chauffer le fluide réfrigérant. Selon encore un autre exemple, le dispositif de chauffage électrique 1 est agencé en amont d'un échangeur de chaleur utilisant le fluide de refroidissement d'un moteur thermique comme fluide caloporteur. On pourrait aussi prévoir un tel dispositif de chauffage électrique 1 en amont d'un échangeur de chaleur destiné à la régulation thermique d'un dispositif de stockage de l'énergie électrique, parfois qualifié d'ensemble de batteries, pour un véhicule à propulsion électrique ou hybride.

Le dispositif de chauffage électrique 1 représenté comprend un premier et un deuxième modules de chauffe 2a, 2b, un moyen de commande 3, un boîtier d'entrée de fluide 4 et un boîtier de sortie de fluide 5.

Mieux visible sur la figure 2, chaque module de chauffe 2a, 2b comporte un noyau central 6, par exemple creux, et un élément chauffant 7a, 7b réalisé sous la forme d'une enveloppe cylindrique entourant le noyau central 6 de manière à définir un circuit de guidage du fluide à chauffer (tel que du liquide) entre la surface externe du noyau central 6 et la surface interne de l'enveloppe de l'élément chauffant 7a, 7b. Les modules de chauffe 2a, 2b présentent une forme générale sensiblement cylindrique définie par l'enveloppe de l'élément chauffant 7a, 7b. Le circuit de guidage est ainsi axialement parallèle à l'axe longitudinal A du noyau central 6 et de l'élément chauffant 7a, 7b (figure 2).

L'élément chauffant 7a, 7b est commandé par le moyen de commande 3 pour chauffer le fluide par échange de chaleur entre l'élément chauffant 7a, 7b et le fluide circulant dans le circuit de guidage 8.

Les modules de chauffe 2a, 2b sont identiques et sont disposés côte à côte de façon sensiblement parallèle. Cette disposition côte à côte permet de réduire l'encombrement du dispositif de chauffage 1 dans le sens longitudinal. De plus, cet agencement présente une faible inertie de chauffe et une faible perte de charge.

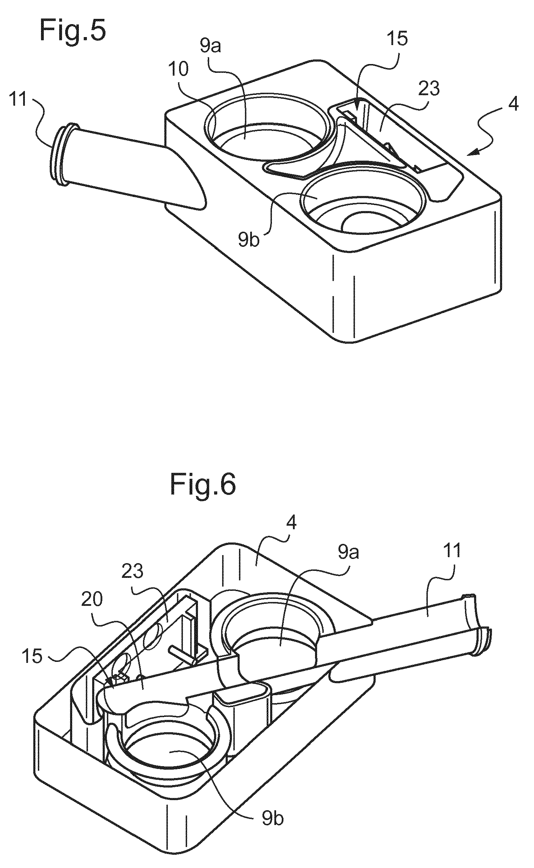

Les modules de chauffe 2a, 2b présentent respectivement des extrémités longitudinalement opposées. Les extrémités d'entrées sont reçues dans une cavité 9a, 9b respective du boîtier d'entrée de fluide 4 (figure 5) et les extrémités de sorties sont reçues dans une cavité respective du boîtier de sortie de fluide 5.

Un canal d'entrée 10 du fluide est formé dans le boîtier d'entrée de fluide 4. Le canal d'entrée 10 communique avec le circuit de guidage 8 du premier module de chauffe 2a et avec le circuit de guidage 8 du deuxième module de chauffe 2b.

Le boîtier d'entrée de fluide 4 présente ainsi une base sensiblement parallélépipédique munie d'une première et d'une deuxième cavités 9a, 9b de forme cylindriques à fond sphérique pour recevoir les extrémités d'entrée respectives des modules de chauffe 2a, 2b. Le boîtier d'entrée de fluide 4 comporte également une tubulure saillante d'admission de fluide 11 du dispositif de chauffage électrique 1. Le canal d'entrée 10 raccorde ainsi fluidiquement la tubulure d'admission 11 en parallèle aux deux cavités 9a, 9b.

De même, un canal de sortie 28 du fluide est formé dans le boîtier de sortie de fluide 5 et communique avec le circuit de guidage 8 du premier module de chauffe 2a et avec le circuit de guidage 8 du deuxième module de chauffe 2b.

Comme on peut le voir sur la figure 1, le boîtier de sortie de fluide 5 présente sensiblement la même forme que le boîtier d'entrée de fluide 4. Il présente ainsi une base sensiblement parallélépipédique munie des deux cavités pour recevoir les extrémités de sortie des modules de chauffe 2a, 2b et d'une tubulure saillante de sortie de fluide 12 du dispositif de chauffage électrique 1, destinée à être raccordée à un circuit de fluide chauffé. Les boîtiers de sortie et d'entrée 5, 4 sont ainsi raccordés symétriquement, aux deux extrémités opposées des modules de chauffe 7a, 7b.

Le moyen de commande 3 de l'élément chauffant 7a, 7b comporte un support de circuit électrique 13, deux interrupteurs de courant électrique 14a, 14b et un dissipateur thermique 15.

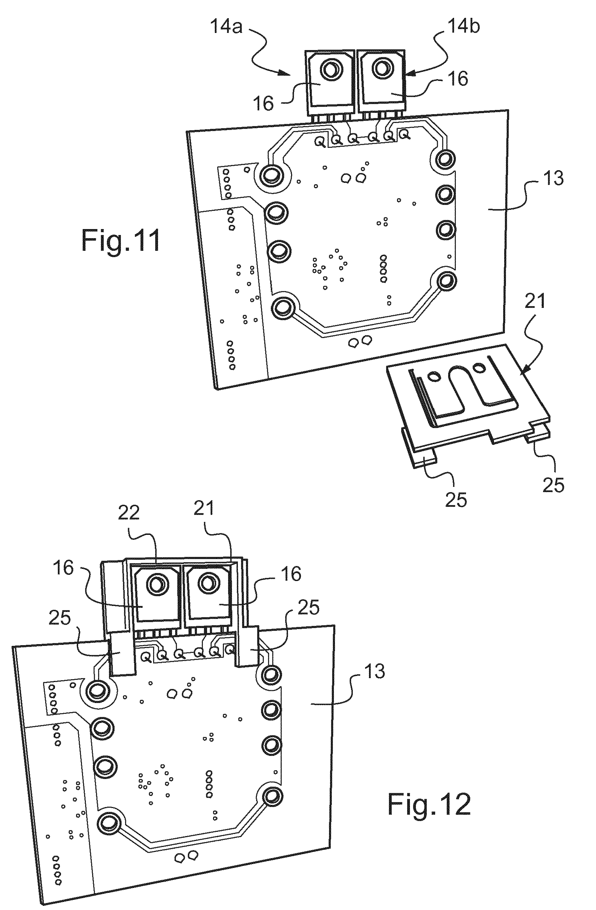

Les interrupteurs de courant électrique 14a, 14b sont respectivement électriquement reliés aux éléments chauffants 7a, 7b des modules de chauffe respectifs 2a, 2b, via le support de circuit électrique 13 (figures 11 et 12).

Les interrupteurs de courant électrique 14a, 14b sont des composants électriques ou électroniques. Les interrupteurs de courant électriques 14a, 14b comportent par exemple un transistor à effet de champ Métal-Oxyde, couramment dénommé par l'acronyme anglais « MOSFET ». Selon un autre exemple, les interrupteurs de courant électriques 14a, 14b comprennent un transistor bipolaire à grille isolée, couramment dénommé par l'acronyme anglais « IGBT » pour « Insulated Gate Bipolar Transistor ».

La mise en oeuvre de chaque élément chauffant 7a, 7b est contrôlée par un interrupteur de courant électrique respectif 14a, 14b dont l'ouverture et/ou la fermeture pilotée par un microcontrôleur par exemple en modulation de largeur d'impulsions (MLI ou PWM en anglais pour « Pulse Width Modulation ») pour autoriser et/ou interdire la mise en oeuvre de l'élément chauffant 7a, 7b auquel il est relié selon une consigne de chauffage.

Bien qu'il soit décrit que le module de commande 3 comporte un interrupteur de courant électrique 14a, 14b dédié à la commande d'un élément chauffant 7a, 7b, il est également envisageable de prévoir un seul interrupteur de courant électrique pour la commande des deux éléments chauffants 7a, 7b. On prévoit deux interrupteurs de courant électrique par sécurité afin de s'assurer qu'en cas de panne de l'un d'entre eux, l'autre interrupteur puisse assurer la mise en oeuvre d'un élément chauffant.

Les interrupteurs de courant électrique 14a, 14b comportent une semelle 16 (c'est-à-dire une languette au dos de l'interrupteur) en matériau thermiquement conducteur. La surface de la semelle 16 est prévue suffisamment grande et couvre par exemple toute la surface de l'interrupteur de courant électrique 14a, 14b.

Le support de circuit électrique 13, tel qu'une carte à circuit imprimé (ou PCB en anglais pour "Printed circuit board"), porte les composants électroniques et/ou électriques. Outre les interrupteurs de courant électrique 14a, 14b, ces composants électroniques et/ou électriques peuvent par exemple comporter un microcontrôleur, des contacts électriques reliant les éléments de chauffage 7a, 7b aux interrupteurs de courant électrique 14a, 14b, des connecteurs d'alimentation haute tension 17 et un connecteur d'alimentation basse tension et de bus de données 18 (figure 2). Les contacts électriques sont par exemple portés par une face opposée du support de circuit électrique 13 à la face portant par exemple le microcontrôleur.

Le dissipateur thermique 15 présente une première surface 20 délimitant au moins partiellement le canal d'entrée 10 et une deuxième surface 19, hors du canal d'entrée 10, en contact thermique avec les deux semelles 16 des deux interrupteurs de courant électrique 14a, 14b. La première surface 20 est ainsi destinée à être en contact avec le fluide circulant dans le canal d'entrée 10 du boîtier d'entrée de fluide 4 tandis que la deuxième surface 19 est plaquée contre les semelles 16 des interrupteurs de courant électrique 14a, 14b. Le fluide étant plus froid à son arrivée dans le boîtier d'entrée de fluide 4 qu'à la sortie des modules de chauffe 2a, 2b, on profite de cette circulation du fluide encore « froid » pour dissiper la chaleur générée par les interrupteurs de courant électrique 14a, 14b par conduction thermique dans le dissipateur thermique 15 et échange de chaleur avec le fluide. On peut ainsi par exemple évacuer entre 2 et 10W dans le fluide.

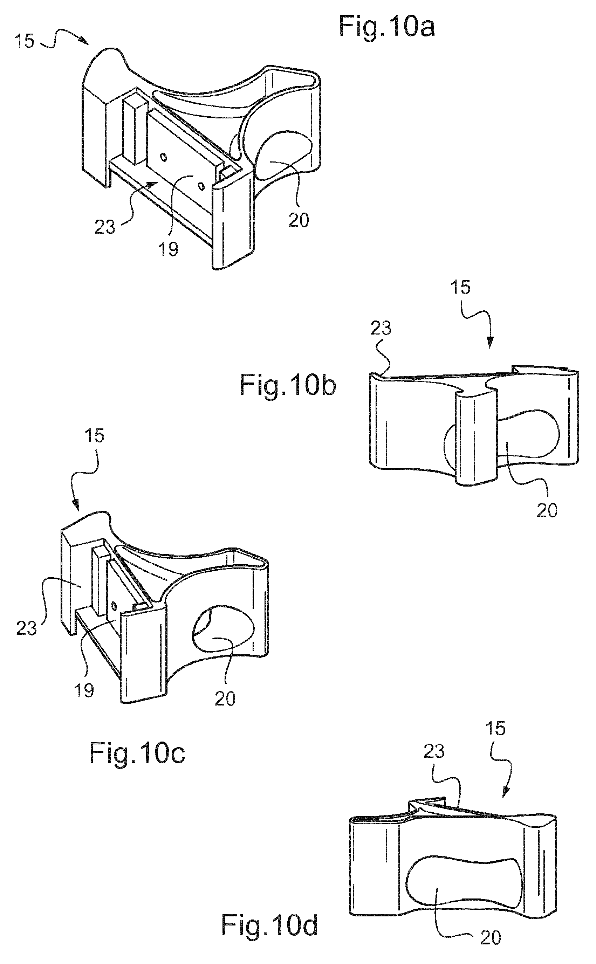

Le dissipateur thermique 15 présente par exemple une forme générale s'étendant entre les cavités 9a, 9b du boîtier d'entrée de fluide 4 (figures 10a, 10b, 10c, 10d). La forme du dissipateur thermique épouse ainsi partiellement le pourtour radial des cavités 9a, 9b cylindriques recevant les modules de chauffe 2a, 2b.

La première surface 20 du dissipateur thermique 15 est par exemple formée dans un conduit du canal d'entrée 10 reliant la première cavité 9a à la deuxième cavité 9b du boîtier d'entrée de fluide 4 (figures 6, 7, 8, 10c et 10d). La tubulure d'admission de fluide 11 et ledit conduit sont par exemple alignés sur un même axe qui traverse sensiblement en diagonale le boîtier d'entrée de fluide 4 (figure 6). Le canal d'entrée 10 est ainsi définit par la tubulure d'admission de fluide 11, le conduit du dissipateur thermique 15 et les cavités 9a, 9b du boîtier d'entrée de fluide 4.

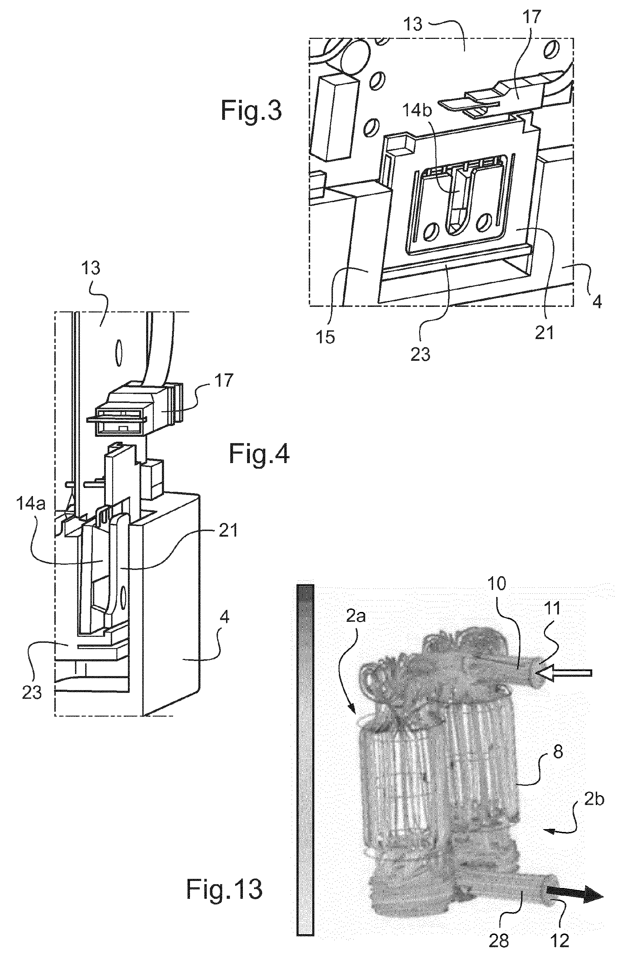

L'écoulement du fluide s'effectue ainsi depuis la tubulure d'admission de fluide 11, dans le canal d'entrée 10, puis en parallèle dans les circuits de guidage 8 des modules de chauffe 2a, 2b et ressort dans le canal de sortie 28. On distingue un exemple de trajectoire du fluide dans un dispositif de chauffage depuis un canal d'entrée 10 jusqu'à un canal de sortie 28 en figure 13.

On prévoit en outre que le module de commande 3 comporte un support d'interrupteur 21 recevant les deux interrupteurs de courant électrique 14a, 14b. Le support d'interrupteur 21 présente une ouverture 22 laissant apparaître les semelles 16 des deux interrupteurs de courant électrique 14a, 14b (figures 1, 11 et 12).

Le dissipateur thermique 15 comporte une embase 23 (c'est-à-dire une partie servant de base et formant un support ou un appui) pour recevoir le support d'interrupteur 21. La deuxième surface 19 est par exemple une face latérale de cette embase 23 (figures 3, 4, 8, 10a et 10c).

L'embase 23 présente un logement muni d'une butée axiale et de deux butées transversales pour le support d'interrupteur 21. Une fois le support d'interrupteur 21 inséré dans l'embase 23, l'ouverture 22 du support d'interrupteur 21 est orientée face à la deuxième surface 19 du dissipateur thermique 15 de sorte que les semelles 16 des interrupteurs de courant électrique 14a, 14b soient en contact thermique avec l'embase 23 du dissipateur thermique 15.

Le dissipateur thermique 15 est reçut dans un logement de forme complémentaire du boîtier d'entrée de fluide 4, qui ferme l'embase 23 derrière le support d'interrupteur 21 (figure 5).

Le dissipateur thermique 15 comporte un matériau métallique, bon conducteur thermique tel qu'un alliage d'aluminium. Le dissipateur thermique 15 est par exemple obtenu par moulage. Il est agencé dans le corps du boîtier d'entrée de fluide 4. Le corps du boîtier d'entrée de fluide 4, par exemple en matériau plastique peut être surmoulé sur le dissipateur thermique 15. L'étanchéité entre le dissipateur thermique 15 et le corps du boîtier d'entrée de fluide 4 est assuré soit par le surmoulage, soit par une colle ou un gel silicone par exemple, si le dissipateur thermique 15 est inséré dans le corps du boîtier d'entrée de fluide.

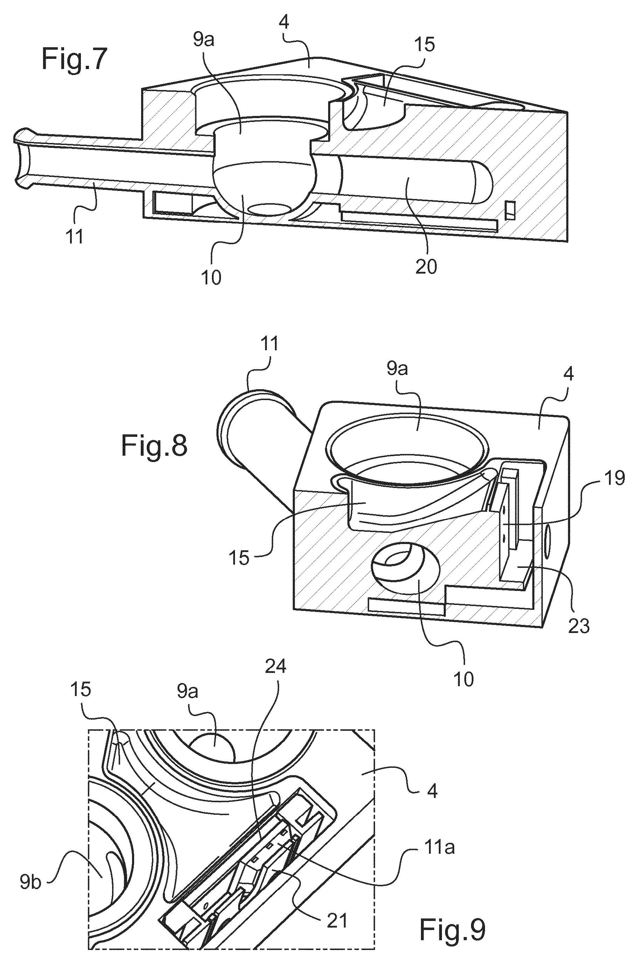

Pour améliorer encore le transfert thermique, le dispositif de chauffage 1 peut comporter une interface thermique 24 interposée entre le dissipateur thermique 15 et les semelles 16 des interrupteurs de courant électrique 14a, 14b (figure 9). L'interface thermique 24 est un film isolant électrique et conducteur thermique. L'interface thermique 24 comporte par exemple un matériau à changement de phase et présente par exemple une conductibilité thermique de l'ordre de 1, 5 W/m.K. Les matériaux à changement de phase présentent l'avantage d'être meilleurs conducteurs thermiques avec l'élévation de la température.

En outre, le support d'interrupteur 21 peut comporter un moyen de fixation amovible 25 au support de circuit électrique 13 du moyen de commande 3. Le moyen de fixation amovible 25 comporte par exemple deux glissières agencées sur deux bords opposés, en amont de l'ouverture 22, adaptées pour s'insérer sur la tranche du support de circuit électrique 13. Les glissières sont munies de butées permettant de bloquer le positionnement du support d'interrupteur 21 sur le support de circuit électrique 13 en laissant l'ouverture 22, et donc les semelles 16 des interrupteurs de courant électrique 14a, 14b accessibles.

On prévoit de plus que le boîtier d'entrée de fluide 4 comporte un premier moyen de positionnement 26 du support de circuit électrique 13 et que le boîtier de sortie de fluide 5 présente un deuxième moyen de positionnement 27 du support de circuit électrique 13 (figure 1).

Le premier moyen de positionnement 26 comporte par exemple deux clips fixés au corps du boîtier d'entrée de fluide qui fixent de manière amovible le support de circuit électrique 13. De même, le deuxième moyen de positionnement 27 comporte par exemple deux clips fixés au corps du boîtier de sortie de fluide qui fixent de manière amovible le support de circuit électrique 13. Les quatre clips pincent le support de circuit électrique 13 aux quatre coins.

Ainsi, le support d'interrupteur 21 permet de positionner les interrupteurs de courant électrique 14a, 14b sur le support de circuit électrique 13 durant l'assemblage du support de circuit électrique 13 aux boîtiers d'entrée 4 et de sortie 5 et durant l'assemblage du dispositif de chauffage 1. Le support d'interrupteur 21 permet également de protéger les interrupteurs de courant électrique 14a, 14b d'éventuels chocs mécaniques, particulièrement lorsqu'ils doivent être manipulés et/ou pendant leur assemblage. Enfin, le support d'interrupteur 21 forme une interface mécanique robuste entre les interrupteurs de courant électrique 14a, 14b, le support de circuit électrique 13 et les autres éléments du dispositif de chauffage 1.

Le dispositif de chauffage 1 est ainsi plus fiable sans augmentation de son encombrement. De plus, l'énergie thermique créée par les interrupteurs de courant électrique 14a, 14b contribue à réchauffer le fluide traversant le dissipateur thermique.

## Revendications

1. Dispositif de chauffage électrique de fluide pour vésicule automobile, comportant:
- au moins un module de chauffe (2a, 2b) comportant au moins un élément chauffant (7a, 7b) et définissant un circuit de guidage (8) du fluide à chauffer,
- un moyen de commande (3) de l'élément chauffant (7a, 7b) comportant un interrupteur de courant électrique (14a, 14b) relié audit élément chauffant (7a, 7b) et un dissipateur thermique (15), ledit dispositif étant **caractérisé en ce que** le dissipateur thermique (15) présente une première surface (20) destinée à être en contact avec le fluide à chauffer et une deuxième surface (19) en contact thermique avec une semelle (16) dudit interrupteur de courant électrique (14a, 14b).

2. Dispositif de chauffage selon la revendication 1, **caractérisé en ce qu'**il comporte un boîtier d'entrée de fluide (4) dans lequel un canal d'entrée (10) du fluide à chauffer est formé, ledit canal d'entrée (10) communiquant avec le circuit de guidage (8) du fluide, ladite première surface (20) du dissipateur thermique (15) délimitant au moins partiellement ledit canal d'entrée (10), ladite deuxième surface (19) étant hors dudit canal d'entrée (10).

3. Dispositif de chauffage selon l'une des revendications 1 ou 2, **caractérisé en ce que** la deuxième surface (19) est formée dans une embase (23) du dissipateur thermique (15) recevant un support d'interrupteur (21) du module de commande (3) logeant au moins un interrupteur de courant électrique (14a, 14b), ledit support d'interrupteur (21) présentant une ouverture (22) laissant apparaître la semelle (16) de l'interrupteur de courant électrique (14a, 14b) et ledit support d'interrupteur (21) étant reçu dans l'embase (23) avec l'ouverture (22) orientée face à ladite deuxième surface (19).

4. Dispositif de chauffage selon la revendication 3, **caractérisé en ce que** ledit support d'interrupteur (21) comporte un moyen de fixation amovible (25) à un support de circuit électrique (13) du moyen de commande (3).

5. Dispositif de chauffage selon l'une des revendications 1 à 4, **caractérisé en ce qu'**il comporte deux modules de chauffe (2a, 2b), le boîtier d'entrée de fluide (4) présentant une première cavité (9a) recevant une extrémité d'entrée du premier module de chauffe (2a) et une deuxième cavité (9b) recevant une extrémité d'entrée du deuxième module de chauffe (2b), ledit canal d'entrée (10) reliant en parallèle lesdites cavités (9a, 9b).

6. Dispositif de chauffage selon la revendication 5, **caractérisé en ce que** la première surface (20) du dissipateur thermique (15) délimitant au moins partiellement le canal d'entrée (10) est formée par la surface interne d'un conduit du canal d'entrée (10) reliant la première cavité (9a) du boîtier d'entrée de fluide (4) à la deuxième cavité (9b) du boîtier d'entrée de fluide (5).

7. Dispositif de chauffage selon l'une des revendications 5 ou 6, **caractérisé en ce que** la forme générale du dissipateur thermique (15) s'étend entre les cavités (9a, 9b) du boîtier d'entrée de fluide (4).

8. Dispositif de chauffage selon l'une des revendications précédentes, **caractérisé en ce que** le dissipateur thermique (15) comporte un matériau métallique.

9. Dispositif de chauffage selon l'une des revendications précédentes, **caractérisé en ce qu'**il comporte une interface thermique (24) interposée entre le dissipateur thermique (15) et la semelle (16) de l'interrupteur de courant électrique (14a, 14b).

10. Dispositif de chauffage selon la revendication 9, **caractérisé en ce que** l'interface thermique (24) est un film isolant électrique et conducteur thermique.

11. Dispositif de chauffage selon la revendication 10, **caractérisé en ce que** l'interface thermique (24) comporte un matériau à changement de phase.

12. Dispositif de chauffage selon l'une des revendications précédentes, **caractérisé en ce que** le boîtier d'entrée de fluide (4) comporte un premier moyen de positionnement (26) d'un support de circuit électrique (13) du moyen de commande (3).

13. Dispositif de chauffage selon l'une des revendications précédentes, **caractérisé en ce qu'**il comporte un boîtier de sortie de fluide (6) dans lequel un canal de sortie (28) du fluide est formé, ledit canal de sortie (28) communiquant avec le circuit de guidage (8) du fluide, ledit boîtier de sortie de fluide (6) et ledit boîtier d'entrée de fluide (5) étant respectivement raccordés aux extrémités opposées des modules de chauffe (2a, 2b).

14. Dispositif de chauffage selon la revendication 13, prise ensemble avec la revendication 12, **caractérisé en ce que** le boîtier de sortie de fluide (6) présente un deuxième moyen de positionnement (27) du support de circuit électrique (13) du moyen de commande (3).

15. Appareil de chauffage et/ou climatisation pour véhicule automobile, **caractérisé en ce qu'**il comprend au moins un dispositif de chauffage électrique (1) selon l'une quelconque des revendications précédentes.

## Patentansprüche

1. Vorrichtung zum elektrischen Erhitzen eines Fluids für ein Kraftfahrzeug, die Folgendes umfasst:
- wenigstens ein Heizmodul (2a, 2b), das wenigstens ein Heizelement (7a, 7b) aufweist und einen Führungskreis (8) für zu erhitzendes Fluid definiert,
- ein Steuermittel (3) für das Heizelement (7a, 7b), das einen Ein/Aus-Schalter (14a, 14b) für elektrischen Strom, der mit dem Heizelement (7a, 7b) verbunden ist, und eine Wärmeabführungseinrichtung (15) aufweist, wobei die Vorrichtung **dadurch gekennzeichnet ist, dass** die Wärmeabführungseinrichtung (15) eine erste Oberfläche (20), die dazu bestimmt ist, mit dem zu erhitzenden Fluid in Kontakt zu gelangen, und eine zweite Oberfläche (19) in thermischem Kontakt mit einer Sohle (16) des Ein/Aus-Schalters (14a, 14b) für elektrischen Strom aufweist.

2. Heizvorrichtung nach Anspruch 1, **dadurch gekennzeichnet, dass** sie ein Fluideintrittsgehäuse (4) umfasst, in dem ein Eintrittskanal (10) für zu erhitzendes Fluid ausgebildet ist, wobei der Eintrittskanal (10) mit dem Führungskreis (8) für Fluid kommuniziert, wobei die erste Oberfläche (20) der Wärmeabführungseinrichtung (15) wenigstens teilweise den Eintrittskanal (10) begrenzt und wobei sich die zweite Oberfläche (19) außerhalb des Eintrittskanals (10) befindet.

3. Heizvorrichtung nach einem der Ansprüche 1 oder 2, **dadurch gekennzeichnet, dass** die zweite Oberfläche (19) in einer Basis (23) der Wärmeabführungseinrichtung (15) ausgebildet ist und einen Träger (21) für den Ein/AusSchalter des Steuermoduls (3) aufnimmt, das wenigstens einen Ein/Aus-Schalter (14a, 14b) für elektrischen Strom aufnimmt, wobei der Träger (21) des Ein/Aus-Schalters eine Öffnung (22) aufweist, die die Sohle (16) des Ein/Aus-Schalters (14a, 14b) für elektrischen Strom freigibt, und der Träger (21) des Ein/Aus-Schalters in der Basis (23) so aufgenommen ist, dass die Öffnung (22) so orientiert ist, dass sie der zweiten Oberfläche (19) zugewandt ist.

4. Heizvorrichtung nach Anspruch 3, **dadurch gekennzeichnet, dass** der Träger (21) des Ein/Aus-Schalters ein abnehmbares Befestigungsmittel (25) an einem Träger (13) der elektrischen Schaltung des Steuermittels (3) umfasst.

5. Heizvorrichtung nach einem der Ansprüche 1 bis 4, **dadurch gekennzeichnet, dass** sie zwei Heizmodule (2a, 2b) umfasst, wobei das Fluideintrittsgehäuse (4) einen ersten Hohlraum (9a) aufweist, der ein Eintrittsende des ersten Heizmoduls (2a) aufnimmt, und einen zweiten Hohlraum (9b) aufweist, der ein Eintrittsende des zweiten Heizmoduls (2b) aufnimmt, wobei der Eintrittskanal (10) die Hohlräume (9a, 9b) parallel verbindet.

6. Heizvorrichtung nach Anspruch 5, **dadurch gekennzeichnet, dass** die erste Oberfläche (20) der Wärmeabführungseinrichtung (15), die den Eintrittskanal (10) wenigstens teilweise begrenzt, durch die innere Oberfläche einer Leitung des Eintrittskanals (10) gebildet ist, die den ersten Hohlraum (9a) des Fluideintrittsgehäuses (4) mit dem zweiten Hohlraum (9b) des Fluideintrittsgehäuses (5) verbindet.

7. Heizvorrichtung nach einem der Ansprüche 5 oder 6, **dadurch gekennzeichnet, dass** sich die allgemeine Form der Wärmeabführungseinrichtung (15) zwischen den Hohlräumen (9a, 9b) des Fluideintrittsgehäuses (4) erstreckt.

8. Heizvorrichtung nach einem der vorhergehenden Ansprüche, **dadurch gekennzeichnet, dass** die Wärmeabführungseinrichtung (15) ein Metallmaterial enthält.

9. Heizvorrichtung nach einem der vorhergehenden Ansprüche, **dadurch gekennzeichnet, dass** sie eine thermische Grenzfläche (24) umfasst, die zwischen die Wärmeabführungseinrichtung (15) und die Sohle (16) des Ein/Aus-Schalters (14a, 14b) für elektrischen Strom eingefügt ist.

10. Heizvorrichtung nach Anspruch 9, **dadurch gekennzeichnet, dass** die thermische Grenzfläche (24) ein elektrisch isolierender Film und ein Wärmeleiter ist.

11. Heizvorrichtung nach Anspruch 10, **dadurch gekennzeichnet, dass** die thermische Grenzfläche (24) ein Phasenänderungsmaterial umfasst.

12. Heizvorrichtung nach einem der vorhergehenden Ansprüche, **dadurch gekennzeichnet, dass** das Fluideintrittsgehäuse (4) ein erstes Mittel (26) zum Positionieren eines Trägers (13) der elektrischen Schaltung des Steuermittels (3) umfasst.

13. Heizvorrichtung nach einem der vorhergehenden Ansprüche, **dadurch gekennzeichnet, dass** sie ein Fluidaustrittsgehäuse (6) umfasst, in dem ein Austrittskanal (28) für das Fluid gebildet ist, wobei der Austrittskanal (28) mit dem Führungskreis (8) für das Fluid kommuniziert, wobei das Fluidaustrittsgehäuse (6) und das Fluideintrittsgehäuse (5) mit den jeweiligen gegenüberliegenden Enden der Heizmodule (2a, 2b) verbunden sind.

14. Heizvorrichtung nach Anspruch 13, wenn abhängig von Anspruch 12, **dadurch gekennzeichnet, dass** das Fluidaustrittsgehäuse (6) ein zweites Mittel (27) zum Positionieren des Trägers (13) der elektrischen Schaltung des Steuermittels (3) aufweist.

15. Heiz- und/oder Klimatisierungsgerät für ein Kraftfahrzeug, **dadurch gekennzeichnet, dass** es wenigstens eine elektrische Heizvorrichtung (1) nach einem der vorhergehenden Ansprüche umfasst.

## Claims

1. Electric fluid heating device for a motor vehicle, comprising:
- at least one heating module (2a, 2b) comprising at least one heating element (7a, 7b) and defining a guiding circuit (8) for the fluid to be heated,
- a control means (3) for the heating element (7a, 7b) comprising an electric current switch (14a, 14b) linked to said heating element (7a, 7b) and a heat sink (15), said device being **characterized in that** the heat sink (15) has a first surface (20) intended to be in contact with the fluid to be heated and a second surface (19) in thermal contact with a sole plate (16) of said electric current switch (14a, 14b).

2. Heating device according to Claim 1, **characterized in that** it comprises a fluid inlet casing (4) in which an inlet channel (10) for the fluid to be heated is formed, said inlet channel (10) communicating with the fluid guiding circuit (8), said first surface (20) of the heat sink (15) at least partially delimiting said inlet channel (10), said second surface (19) being out of said inlet channel (10).

3. Heating device according to one of Claims 1 or 2, **characterized in that** the second surface (19) is formed in a base (23) of the heat sink (15) receiving a switch support (21) for the control module (3) housing at least one electric current switch (14a, 14b), said switch support (21) having an opening (22) revealing the sole plate (16) of the electric current switch (14a, 14b) and said switch support (21) being received in the base (23) with the opening (22) oriented facing said second surface (19).

4. Heating device according to Claim 3, **characterized in that** said switch support (21) comprises a removable means for fixing (25) to an electric current support (13) of the control means (3).

5. Heating device according to one of Claims 1 to 4, **characterized in that** it comprises two heating modules (2a, 2b), the fluid inlet casing (4) having a first cavity (9a) receiving an inlet end of the first heating module (2a) and a second cavity (9b) receiving an inlet end of the second heating module (2b), said inlet channel (10) linking said cavities (9a, 9b) in parallel.

6. Heating device according to Claim 5, **characterized in that** the first surface (20) of the heat sink (15) at least partially delimiting the inlet channel (10) is formed by the inner surface of a duct of the inlet channel (10) linking the first cavity (9a) of the fluid inlet casing (4) to the second cavity (9b) of the fluid inlet casing (5).

7. Heating device according to one of Claims 5 or 6, **characterized in that** the general form of the heat sink (15) extends between the cavities (9a, 9b) of the fluid inlet casing (4).

8. Heating device according to one of the preceding claims, **characterized in that** the heat sink (15) comprises a metallic material.

9. Heating device according to one of the preceding claims, **characterized in that** it comprises a thermal interface (24) interposed between the heat sink (15) and the sole plate (16) of the electric current switch (14a, 14b).

10. Heating device according to Claim 9, **characterized in that** the thermal interface (24) is an electrically insulating and thermally conducting film.

11. Heating device according to Claim 10, **characterized in that** the thermal interface (24) comprises a phase change material.

12. Heating device according to one of the preceding claims, **characterized in that** the fluid inlet casing (4) comprises a first positioning means (26) for an electric circuit support (13) of the control means (3).

13. Heating device according to one of the preceding claims, **characterized in that** it comprises a fluid outlet casing (6) in which a fluid outlet channel (28) is formed, said outlet channel (28) communicating with the fluid guiding circuit (8), said fluid outlet casing (6) and said fluid inlet casing (5) being respectively coupled to the opposite ends of the heating modules (2a, 2b).

14. Heating device according to Claim 13, taken together with Claim 12, **characterized in that** the fluid outlet casing (6) has a second positioning means (27) for the electric circuit support (13) of the control means (3).

15. Heating and/or air-conditioning apparatus for a motor vehicle, **characterized in that** it comprises at least one electric heating device (1) according to any one of the preceding claims.
